(19) Europäisches Patentamt
European Patent Office
Office européen des brevets

(11) **EP 1 391 752 B1**

(12) **EUROPÄISCHE PATENTSCHRIFT**

(45) Veröffentlichungstag und Bekanntmachung des Hinweises auf die Patenterteilung:
**13.07.2011 Patentblatt 2011/28**

(51) Int Cl.:
*G01V 3/20* (2006.01)   *F16P 3/14* (2006.01)
*G08B 13/183* (2006.01)

(21) Anmeldenummer: **03016765.4**

(22) Anmeldetag: **23.07.2003**

(54) **Lichtgitter**

Light curtain

Grille de lumière

(84) Benannte Vertragsstaaten:
**AT BE BG CH CY CZ DE DK EE ES FI FR GB GR HU IE IT LI LU MC NL PT RO SE SI SK TR**

(30) Priorität: **21.08.2002 DE 20212769 U**

(43) Veröffentlichungstag der Anmeldung:
**25.02.2004 Patentblatt 2004/09**

(73) Patentinhaber: **Leuze electronic GmbH + Co. KG 73277 Owen/Teck (DE)**

(72) Erfinder: **Rohbeck, Volker , Dr.
85244 Röhrmoos (DE)**

(74) Vertreter: **Ruckh, Rainer Gerhard
Fabrikstrasse 18
73277 Owen/Teck (DE)**

(56) Entgegenhaltungen:
**DE-C1- 19 510 304     US-A- 5 243 183
US-A- 5 408 089     US-A- 5 834 765**

**Beschreibung**

Die Erfindung betrifft ein Lichtgitter gemäß dem Oberbegriff des Anspruchs 1.

Ein derartiges Lichtgitter ist aus der DE 195 04 304 C1 bekannt. Das Lichtgitter weist zur Überwachung eines flächigen Überwachungsbereichs eine Sendereinheit und eine Empfängereinheit auf, die an gegenüberliegenden Rändern des Überwachungsbereichs angeordnet sind. Die Sendereinheit weist eine Anordnung von nebeneinander liegend angeordneten, Sendelichtstrahlen emittierenden Sendern auf. Entsprechend weist die Empfängereinheit eine Anordnung von nebeneinander liegend angeordneten Empfängern auf. Bei freiem Strahlengang werden die Empfänger mit den von den Sendern emittierten Sendelichtstrahlen beaufschlagt. Befindet sich ein Objekt im Strahlengang, so wird der Strahlengang der Sendelichtstrahlen wenigstens eines Senders unterbrochen, so dass diese nicht mehr auf den zugeordneten Empfänger oder die zugeordneten Empfänger auftreffen, wodurch als Objektmeldung ein Objektfeststellungssignal generiert wird.

Derartige Lichtgitter werden insbesondere im Bereich des Personenschutzes eingesetzt. Beispielsweise werden die Lichtgitter zur Überwachung von sicherheitskritischen Bereichen an Anlagen und Maschinen wie zum Beispiel Werkzeugmaschinen, Pressen oder dergleichen, eingesetzt.

Bei einem Eingriff in den vom Lichtgitter überwachten Überwachungsbereich wird durch die im Lichtgitter generierte Objektmeldung die Werkzeugmaschine außer Betrieb gesetzt, so dass für eine im Bereich der Werkzeugmaschine arbeitende Person die Gefahr von Verletzungen ausgeschlossen ist.

Aufgrund externer Störeinflusse kann bei einem derartigen Lichtgitter ein Objektfeststellungssignal generiert werden, ohne dass tatsächlich ein Objekt im Überwachungsbereich angeordnet ist.

Dies führt dann zu einem unnötigen Stillsetzen der jeweiligen Maschine der Anlage und damit zu einem unerwünschten Produktionsausfall.

Derartige Störungen können beispielsweise von Fremdlichteinstrahlungen gebildet sein. Hierzu gehören insbesondere auch Einstrahlungen von benachbarten weiteren Lichtgittern, deren Sendelichtstrahlen über reflektierende Oberflächen auf die Empfänger des jeweils anderen Lichtgitters geführt werden können.

Weiterhin können bei Bearbeitungsprozessen an Maschinen und Anlagen Funken, Späne und dergleichen entstehen und in den Überwachungsbereich gelangen und so zu einer unerwünschten Auslösung eines Objektfeststellungssignals im jeweiligen Lichtgitters führen.

Zur Unterdrückung derartiger Störeinflüsse ist bei dem Lichtgitter gemäß der DE 195 10 304 C1 vorgesehen, dass die Sender Sendelichtstrahlen in Form von Pulsen mit unterschiedlichen Kodierungen ermitteln. Dabei erfolgt die Kodierung derart, dass der Sender der ersten Strahlachse eine Kennung zur Synchronisierung der Lichtgitter emittiert. Die restlichen Sender des Lichtgitters emittieren pulslage-modulierte Einzel-Lichtpulse, welche vorgegebene Bitwerte kodieren. Die Bitwerte werden empfangsseitig dekodiert und mit vorgegebenen Sollwerten zur Überprüfung des fehlerfreien Betriebs des Lichtgitters verglichen.

Mit diesem Kodierverfahren kann insbesondere auf effiziente Weise eine gegenseitige optische Beeinflussung benachbarter Lichtgitter ausgeschlossen werden.

Nachteilig hierbei ist jedoch, dass der Schaltungsaufwand zur Durchführung der Kodierung und Dekodierung unerwünscht hoch ist.

Aus der US-A-5 408 069 ist ein Lichtgitter bekannt, dass zur Erfassung beweglicher Objekte dient. Das Lichtgitter weist eine vorgegebene Anzahl von Paaren von Lichtstrahlen emittierenden Sendern und Lichtstrahlen empfangenden Empfängern auf. Innerhalb eines Abtastzyklus werden die einzelnen Paare einzeln nacheinander aktiviert. In jedem Abtastzyklus erfolgt eine Objektdetektion. In unterschiedlichen Abtastzyklen erfasste Objekte werden miteinander verglichen, wobei unter bestimmten Bedingungen für die Detektion eines Objekts in einem Abtastzyklus das in einem vorhergehenden Abtastzyklus ermittelte Objekt verworfen wird.

Aus der US-A-5 243 183 ist ein weiteres Lichtgitter bestehend aus einer Anzahl von Paaren von Sendern und Empfängern, die einzeln nacheinander während eines Abtastzyklus aktiviert werden. Eine Objektdetektion erfolgt, in dem überprüft wird, ob die Lichtstrahlen eines Paares unterbrochen sind. Eine derartige Objektdetektion erfolgt während jedes Abtastzyklus, in dem das dort erhaltene Muster verglichen wird. Zur Verfolgung von Objekten wird die Objektdetektion wiederholt über mehrere Abtastzyklen durchgeführt. Ändert sich dabei das Muster der unterbrochenen Lichtstrahlen wird dies als Objektbewegung bewertet.

Der Erfindung liegt die Aufgabe zugrunde ein Lichtgitter der eingangs genannten Art so auszubilden, dass dieses bei möglichst geringem konstruktiven Aufwand eine möglichst hohe Störsicherheit aufweist.

Zur Lösung dieser Aufgabe sind die Merkmale des Anspruchs 1 vorgesehen. Vorteilhafte Ausführungsformen und zweckmäßige Weiterbildungen der Erfindung sind in den Unteransprüchen beschrieben.

Das erfindungsgemäße Lichtgitter weist eine vorgegebene Anzahl von Strahlachsen bildenden Paaren von Sendelichtstrahlen emittierenden Sendern und

Empfängern auf, wobei bei freiem Strahlengang einer Strahlachse die von dem jeweiligen Sender emittierten Sendelichtstrahlen auf den Empfänger treffen. Mittels einer Sender-Steuereinheit werden die Sender innerhalb vorgegebener Abtastzyklen periodisch einzeln nacheinander aktiviert. Mit einer Steuereinheit erfolgt die Auswertung der an den Ausgängen der Empfänger anstehenden Empfangssignale. Innerhalb eines Abtastzyklus werden in der Steuereinheit die durch Objekteingriffe bedingten Unterbrechungen von Strahlachsen registriert. Zur Generierung eines Objektfeststellungssignals wird in der Steuereinheit eine vorgegebene Anzahl mehrerer Abtastzyklen hinsichtlich des Auftretens von Strahlunterbrechungen von Strahlachsen ausgewertet. Diese Anzahl von Abtastzyklen ist als Parameterwert in der Auswerteeinheit abgespeichert.

Der Grundgedanke der Erfindung besteht somit darin, eine Mehrfachauswertung durchzuführen, dass nicht innerhalb jedes einzelnen Abtastzyklus ein Objektfeststellungssignal generiert wird. Vielmehr werden mehrere, vorzugsweise aufeinanderfolgende Abtastzyklen zu einem Auswerteblock zusammengefasst. Innerhalb dieser mehreren Abtastzyklen werden Strahlunterbrechungen der Strahlachsen registriert, wobei in Abhängigkeit des Ergebnisses der Auswertung ein Objektfeststellungssignal generiert wird.

Da erfindungsgemäß mehrere Abtastzyklen zur Generierung eines Objektfeststellungssignals herangezogen werden, wird gegenüber konventionellen Lichtgitter, bei welchen innerhalb jedes einzelnen Abtastzyklus ein Objektfeststellungssignal generiert wird, die Auswertezeit zur Objekterfassung beträchtlich erhöht.

Dadurch können insbesondere transiente Störeinflüsse, die nur zu kurzzeitigen Eingriffen in die Strahlengänge von Sendelichtstrahlen führen, von Objekteingriffen, die über längere Zeiträume die Strahlachsen des Lichtgitters unterbrechen, sicher unterschieden werden.

Das erfindungsgemäße Lichtgitter kann somit auch in Umgebungen mit starken externen Störeinflüssen eingesetzt werden, ohne dass dessen Nachweissicherheit bei der Objektdetektion nennenswert beeinflusst wird.

Insbesondere führen Störeinflüsse wie zum Beispiel in den Strahlengang der Sendelichtstrahlen des Lichtgitters eindringende Späne oder Funken, die an zu überwachenden Anlagen der Maschinen entstehen, nicht zu einem ungewollten Ansprechen des Lichtgitters.

Gemäß einer ersten Ausführungsform der Erfindung wird bei dem erfindungsgemäßen Lichtgitter ein Objektfeststellungssignal nur dann generiert, wenn innerhalb einer vorgegebenen Anzahl von vorzugsweise aufeinander folgenden Abtastzyklen dieselbe Strahlachse des Lichtgitters unterbrochen ist. Dabei reicht es aus, dass bei jedem Abtastsystem nur eine Strahlachse unterbrochen ist.

Diese Ausführungsform ist besonders robust gegen auftretende transiente Störungen, da zur Auslösung eines Objektfeststellungssignals während der Abtastzyklen nacheinander dieselbe Strahlachse unterbrochen sein muss, d.h. das Objekt jeweils am selben Ort innerhalb des vom Lichtgitter erfassten Überwachungsbereichs detektiert werden muss.

Da transiente Störungen wie umherfliegende Späne, Funken oder dergleichen im Gegensatz zu detektierenden Objekten oder Personen mit großer Geschwindigkeit den Überwachungsbereich passieren, können diese mit hoher Sicherheit bei der Auswertung im Lichtgitter eliminiert werden.

Gemäß einer zweiten Ausführungsform der Erfindung wird bei dem erfindungsgemäßen Lichtgitter ein Objektfeststellungssignal nur dann generiert, wenn innerhalb einer vorgegebenen Anzahl von vorzugsweise aufeinanderfolgenden Abtastzyklen jeweils wenigstens eine Strahlachse unterbrochen wird, wobei es in diesem Fall nicht darauf ankommt, welche der Strahlachsen jeweils unterbrochen wird.

In diesem Fall können mit dem Lichtgitter auch sich mit größerer Geschwindigkeit bewegende Objekte erfasst werden, deren Positionen sich innerhalb eines Abtastzyklus signifikant ändern können. Bei dieser Ausführungsform werden transiente Störungen wie umher fliegende Späne, Funken und dergleichen dadurch von einem Objekt unterschieden, dass diese Störungen zwar innerhalb der mehreren Abtastzyklen mehrfach auftreten, jedoch nicht kontinuierlich vorhanden sind. Damit verursachen die Störungen im Gegensatz zu den Objekteingriffen nicht innerhalb jedes Abtastzyklus Unterbrechungen von Strahlachsen des Lichtgitters.

Bei jeder dieser Ausführungsformen kann die Störsicherheit dadurch erhöht werden, dass die Anzahl der Abtastzyklen, die zur Generierung eines Objektfeststellungssignals herangezogen werden, möglichst groß gewählt wird.

Durch die Erhöhung der Anzahl der Abtastzyklen, die zur Generierung eines Objektfeststellungssignals herangezogen werden, erhöht sich die Reaktionszeit des Lichtgitters entsprechend. Die Reaktionszeit ist durch das Zeitintervall definiert, innerhalb dessen zwei aufeinanderfolgende Objektfeststellungssignale generiert werden. Dieses Zeitintervall entspricht der Anzahl der Abtastzyklen, die zur Generierung eines Objektfeststellungssignals herangezogen werden, multipliziert mit der Dauer eines Abtastzyklus. Die Dauer eines Abtastzyklus ist bei fest vorgegebener Scanrate, d.h. fest vorgegebenen Zeitintervallen, innerhalb deren die einzelnen Strahlachsen nacheinander aktiviert werden, proportional zur Anzahl der Strahlachsen des Lichtgitters.

In einer vorteilhaften Ausführungsform sind in der Steuereinheit verschiedene Multiscanfaktoren in Form einer Kennlinie hinterlegt, wobei einzelnen Multiscanfaktoren unterschiedlichen Werten von Strahlachsen eines Lichtgitters zugeordnet sind. Jeder Multiscanfaktor bezeichnet die Anzahl der Abtastzyklen, die zur Generierung eines Objektfeststellungssignal herangezogen werden.

Die Lichtgitter werden je nach Applikation mit einer bestimmten Anzahl von Strahlachsen produziert und ausgeliefert.

In einer Konfigurationsphase vor Inbetriebnahme des Lichtgitters wird dann in der Steuereinheit für die jeweilige Anzahl der Strahlachsen der gemäß der Kennlinie zugeordnete Wert des Multiscanfaktors ausgewählt. Die Auswahl des Multiscanfaktors erfolgt dabei zweckmäßigerweise derart, dass für eine beliebige Anzahl von Strahlachsen eine bestimmte Reaktionszeit des Lichtgitters erhalten wird.

Die Erfindung wird im Nachstehenden anhand der Zeichnungen erläutert. Es zeigen:

Figur 1:    Schematische Darstellung eines Lichtgitters mit einer vorgegebenen Anzahl von Strahlachsen.

Figur 2:    Erstes Ausführungsbeispiel eines Auswerteverfahrens zur Objekterfassung

a) bei einem Objekteingriff in das Lichtgitter,

b) bei Auftreten einer externen Störung.

Figur 3:    Zweites Ausführungsbeispiel eines Auswerteverfahrens zur Objekterfassung

a) bei einem Objekteingriff in das Lichtgitter,

b) bei Auftreten einer externen Störung.

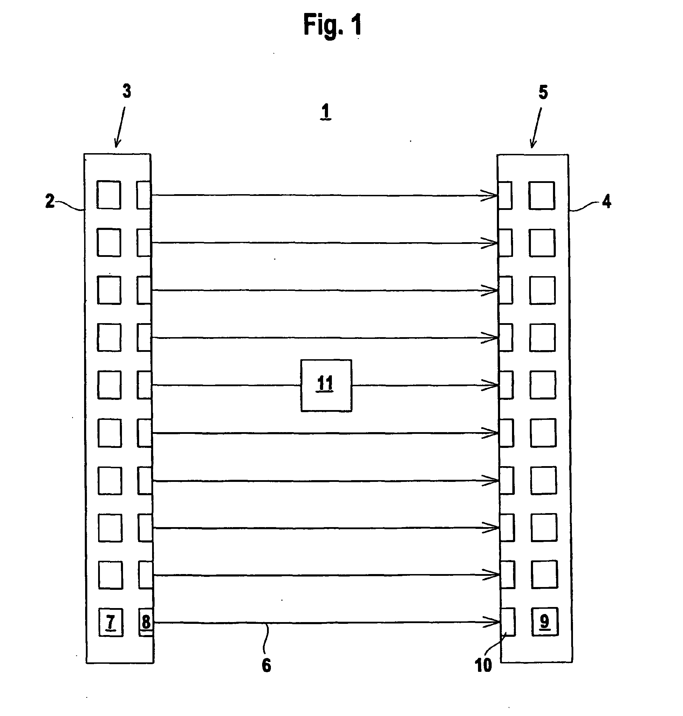

Figur 1 zeigt den Aufbau eines Lichtgitters 1 zur Überwachung eines Überwachungsbereichs. Das Lichtgitter 1 weist eine in einem ersten Gehäuse 2 integrierte Sendereinheit 3 und eine in einem zweiten Gehäuse 4 integrierte Empfängereinheit 5 auf.

Die Sendereinheit 3 weist eine Anordnung von Sendelichtstrahlen 6 emittierenden Sendern 7 auf. Die Sender 7 bestehen vorzugsweise aus identisch ausgebildeten Leuchtdioden und sind in Abstand nebeneinander liegend angeordnet, wobei die Sender 7 vorzugsweise äquidistant angeordnet sind. Die Sender 7 werden von einer nicht dargestellten Sender-Steuereinheit angesteuert. Im vorliegenden Ausführungsbeispiel werden die Sender 7 im Pulsbetrieb betrieben. Die Sender 7 emittieren somit Sendelichtimpulse mit einem vorgegebenen Puls-Pausen-Verhältnis. Die einzelnen Sender 7 emittieren zyklisch nacheinander Sendelichtimpulse, wobei die Taktung über die Sender-Steuereinheit erfolgt. Dabei werden innerhalb eines Abtastzyklus die Sender 7 entsprechend ihrer Reihenfolge in der Sendereinheit 3 in einer vorgegebenen Scanrichtung nacheinander aktiviert. Bei einer definierten Taktrate der Taktung der Sender 7 ist die Dauer T eines Abtastzyklus proportional zur Anzahl der Sender 7 der Lichtgitter 1. Die Sendelichtimpulse des ersten Senders 7 dienen zur Synchronisation des Lichtgitters 1. Zweckmäßigerweise weisen hierzu die Sendelichtimpulse des ersten Senders 7 eine Kodierung auf, die sich eindeutig von den Kodierungen der Sendelichtimpulse der übrigen Sender 7 unterscheidet.

Zur Strahlformung der Sendelichtstrahlen 6 ist jedem Sender 7 eine Sendeoptik 8 vorgeordnet. Die Sendeoptiken 8 sind im Bereich der Frontwand des Gehäuses 2 hinter einem nicht separat dargestellten Austrittsfenster angeordnet.

Die optischen Achsen der im Überwachungsbereich geführten Sendelichtstrahlen 6 verlaufen parallel zueinander in der Ebene des Überwachungsbereichs.

Die Empfängereinheit 5 weist eine Anordnung von identisch ausgebildeten, nebeneinander liegend angeordneten Empfängern 9 auf. Die Empfänger 9 bestehen vorzugsweise jeweils aus einer Fotodiode und sind äquidistant angeordnet. Jedem Empfänger 9 ist eine Empfangsoptik 10 vorgeordnet. Dabei liegt jeweils ein Empfänger 9 einem Sender 7 der Sendereinheit 3 gegenüber. Die Strahlformung der Sendelichtstrahlen 6 ist im vorliegenden Fall derart gewählt, dass bei freiem Strahlengang die Sendelichtstrahlen 6 eines Senders 7 jeweils nur auf den gegenüberliegend angeordneten Empfänger 9 treffen. Jeder Sender 7 und der diesem zugeordnete Empfänger 9 bildet eine Strahlachse des Lichtgitters 1.

Die am Ausgang der Empfänger 9 anstehenden Empfangssignale werden in einer nicht dargestellten zentralen Steuereinheit ausgewertet. Bei freiem Strahlengang des Lichtgitters 1 treffen die Sendelichtstrahlen 6 ungehindert auf die zugeordneten Empfänger 9 und generieren dort einem freien Strahlengang entsprechende Referenz-Empfangssignale. Insbesondere erfolgt die Bewertung der Empfangssignale in der Auswerteeinheit mit einem Schwellwert, wobei die Amplituden der Referenz-Empfangssignale oberhalb des Schwellwerts liegen.

Dringt ein Objekt 11 in den Überwachungsbereich ein, so wird der Strahlengang der Sendelichtstrahlen 6 wenigstens eines Senders 7 unterbrochen. Das Empfangssignal des zugeordneten Empfängers 9 liegt dann unterhalb des Schwellwerts, das heißt an diesem Empfänger 9 werden keine Referenz-Empfangssignale registriert.

Die Unterbrechungen der Strahlachsen werden in der Steuereinheit zur Generierung eines Objektfeststellungssignals ausgewertet. Das Objektfeststellungssignal ist als binäres Schaltsignal ausgebildet, welche die Schaltabstände "0" und "1" aufweist. Der Schaltzustand "0" entspricht einem freien Strahlengang des Lichtgitters 1, d.h. in der Steuereinheit wurde kein Objekt registriert. Der Schaltzustand "1" entspricht einem Objekteingriff in den Strahlengang des Lichtgitters 1. Durch die Generierung eines derartigen Objektfeststellungssignals wird ein Abschaltbefehl zum Abschalten einer Maschine oder Anlage generiert, deren Vorfeld mit dem Lichtgitter 1 überwacht wird.

Erfindungsgemäß wird nicht innerhalb jedes Abtastzyklus ein Objektfeststellungssignal generiert. Vielmehr wird ein Objektfeststellungssignal erst nach einer vorgegebenen Anzahl von aufeinanderfolgenden Abtastzyklen generiert, wobei diese Anzahl von Abtastzyklen einen Multiscanfaktor bildet. Die Reaktionszeit des Lichtgitters 1 beträgt somit

$$T_R = T \cdot M,$$

wobei T die Dauer eines Abtastzyklus und M der Multiscanfaktor ist.

Der Multiscanfaktor ist als Parameterwert in der Steuereinheit abgespeichert. Zur Konfigurierung des Lichtgitters 1 wird dieser Multiscanfaktor über eine geeignete Schnittstelle vor Inbetriebnahme in das Lichtgitter 1 eingegeben.

In einer weiteren vorteilhaften Ausführungsform erfolgt die Auswahl des Multiscanfaktors selbsttätig in der Steuereinheit. Hierzu ist in der Steuereinheit eine Kennlinie in Form einer Tabelle zugeordnet. In dieser Kennlinie ist jeweils ein bestimmter Wert eines Multiscanfaktors einer vorgegebenen Anzahl von Strahlachsen des Lichtgitters 1 zugeordnet. Die Zuordnung erfolgt dabei vorzugsweise derart, dass der Wert jedes Multiscanfaktors an den zugeordneten Wert der Strahlachsen des Lichtgitters 1 so angepasst ist, dass jeweils etwa dieselbe Reaktionszeit des Lichtgitters 1 erhalten wird. Dies bedeutet, dass der Wert für Multiscanfaktoren umso höher gewählt wird, je kleiner die zugeordnete Anzahl der Strahlachsen ist.

In einer vor der Inbetriebnahme durchzuführenden Konfigurationsphase wird in der Steuereinheit zunächst die Anzahl der Strahlachsen des Lichtgitters 1 ermittelt. Anhand dieses Wertes erfolgt dann in der Steuereinheit anhand der Kennlinie selbsttätig die Auswahl des entsprechenden Multiscanfaktors, wodurch gleichzeitig die Reaktionszeit des Lichtgitters 1 festgelegt ist.

In der Steuereinheit wird dann ein Objektfeststellungssignal mit dem Schaltzustand als Objektmeldung erzeugt, wenn innerhalb jedes Abtastzyklus der durch den Multiscanfaktor definierten Anzahl von Abtastzyklen jeweils wenigstens die Unterbrechung einer Strahlachse erfolgt. Dagegen unterbleibt eine Objektmeldung bereits dann, wenn nur während eines Abtastzyklus keine Unterbrechung der Strahlachse registriert wird.

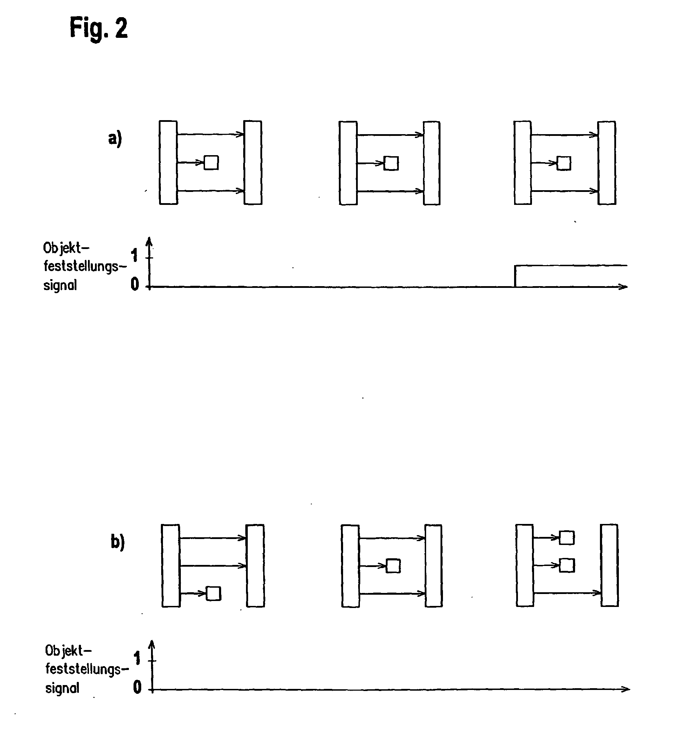

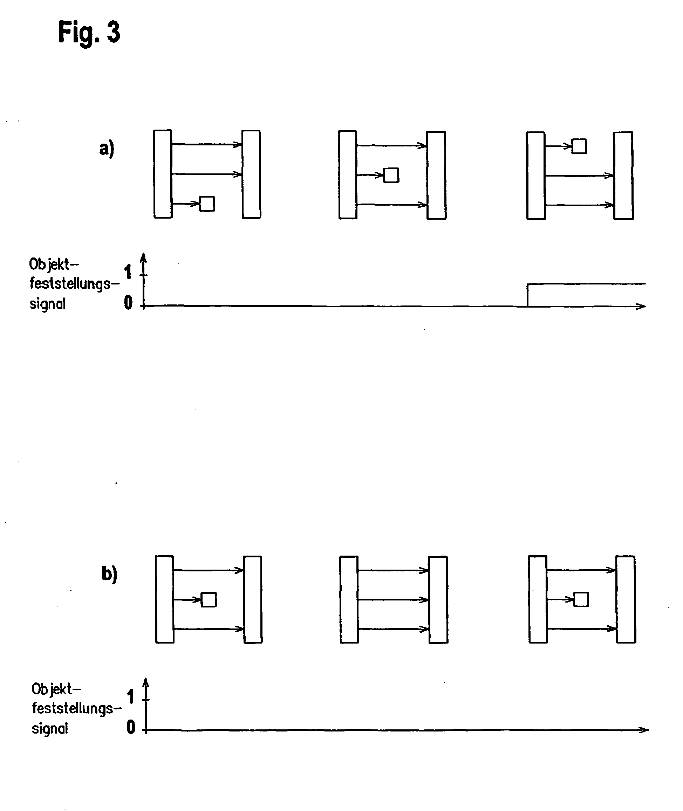

Die Auswertung in der Steuereinheit erfolgt dabei, insbesondere gemäß zwei unterschiedlichen Varianten, welche in den Figuren 2a, b und 3a, b veranschaulicht sind.

Der Übersichtlichkeit halber sind die Auswerteverfahren gemäß den Figuren 2a, 2b und 3a, 3b für den Fall eines Lichtgitters 1 mit drei Strahlachsen erläutert. In beiden Fällen beträgt der Multiscanfaktor M = 3. Damit erfolgt jeweils nach drei aufeinander folgenden Abtastzyklen die Generierung eines Objektfeststellungssignals. Die Figuren 2a, 2b und 3a, 3b zeigen die jeweils für die drei aufeinanderfolgenden Abtastzyklen erhaltenen Signalzustände des Lichtgitters 1. Dabei liegt jeweils zum Anfangszeitpunkt vor Durchführung der drei Abtastzyklen als Anfangszustand ein Objektfeststellungssignal mit dem Schaltzustand "0" vor.

Bei dem Auswerteverfahren gemäß den Figuren 2a, 2b erfolgt nur dann die Generierung eines Objektfeststellungssignals mit dem Schaltzustand "1", wenn in den drei aufeinanderfolgenden Abtastzyklen jeweils wenigstens eine Strahlachse unterbrochen ist, wobei zusätzlich gefordert wird, dass in den Abtastzyklen jeweils dieselbe Strahlachse unterbrochen sein muss.

Bei dem in Figur 2a dargestellten Fall ist diese Bedingung erfüllt. In den drei aufeinanderfolgenden Abtastzyklen ist jeweils die zweite Strahlachse des Lichtgitters 1 unterbrochen, während die anderen Strahlachsen nicht unterbrochen sind. Demzufolge nimmt nach Registrieren der zweiten unterbrochenen Strahlachse während des dritten Abtastzyklus das Objektfeststellungssignal den Schaltzustand "1" an. Dies bedeutet, dass dieser Fall in der Steuereinheit als ein Objekteingriff interpretiert wird, der zum Abschalten der angeschlossenen Maschine oder Anlage führt.

Bei dem in Figur 2b dargestellten Fall wird während des ersten Abtastzyklus eine Unterbrechung der dritten Strahlachse des Lichtgitters 1 registriert. Während des zweiten Abtastzyklus ist dagegen die zweite Strahlachse unterbrochen. Schließlich sind während des dritten Abtastzyklus die erste und zweite Strahlachse des Lichtgitters 1 unterbrochen.

Obwohl während des dritten Abtastzyklus sogar zwei Strahlachsen unterbrochen sind, ist die Bedingung, dass bei jedem Abtastzyklus dieselbe Strahlachse unterbrochen sein muss, in diesem Fall nicht erfolgt. Demzufolge bleibt der Schaltzustand des Objektfeststellungssignals auch nach Ablauf des dritten Abtastzyklus auf dem Wert "0". Dies bedeutet, dass dieser Fall in dem Lichtgitter 1 nicht als Objekteingriff interpretiert wird, der zum Abschalten der angeschlossenen Maschine oder Anlage führt. Vielmehr wird dieses Muster von Unterbrechungen von Strahlachsen als Auftreten einer transienten Störung interpretiert.

Bei dem Auswerteverfahren gemäß den Figuren 3a, 3b erfolgt dann eine Generierung eines Objektfeststellungssignals mit dem Schaltzustand "1", wenn in den drei aufeinanderfolgenden Abtastzyklen jeweils wenigstens eine unterbrochene Strahlachse registriert wird, wobei es in diesem Fall ohne Belang ist, welche Strahlachse unterbrochen ist.

Bei dem in Figur 3a dargestellten Fall ist während des ersten Abtastzyklus die dritte Strahlachse des Lichtgitters 1 unterbrochen. Dagegen ist während des zweiten Abtastzyklus die zweite Strahlachse und während des dritten Abtastzyklus die erste Strahlachse unterbrochen.

Da während jedes Abtastzyklus wenigstens jeweils eine unterbrochene Strahlachse registriert wird, wird nach dem dritten Abtastzyklus ein Objektfeststellungssignal mit dem Schaltzustand "1" generiert. Dies bedeutet, dass dieser Fall in der Steuereinheit als ein Objekteingriff interpretiert wird, der zum Abschalten der angeschlossenen Anlage oder Maschine führt.

Bei dem in Figur 3b dargestellten Fall wird während des ersten und dritten Abtastzyklus jeweils die Unterbrechung der zweiten Strahlachse des Lichtgitters 1 registriert. Jedoch wird während des zweiten Abtastzyklus überhaupt keine Strahlunterbrechung am Lichtgitter 1 registriert. Da somit nicht während jedes Abtastzyklus wenigstens eine Strahlunterbrechung registriert wird, werden die Signalmuster gemäß Figur 3b in der Steuereinheit als Störsignale und nicht als Objekteingriff, welcher zu einem Abschalten der Anlage oder Maschine führen würde, interpretiert. Demzufolge bleibt der Schaltzustand "0" des Objektfeststellungssignal auch am Ende der dritten Abtastperiode erhalten.

**Bezugszeichenliste**

(1) Lichtgitter
(2) Gehäuse
(3) Sendereinheit
(4) Gehäuse
(5) Empfängereinheit
(6) Sendelichtstrahlen
(7) Sender
(8) Sendeoptik
(9) Empfänger
(10) Empfangsoptik
(11) Objekt

**Patentansprüche**

1. Lichtgitter mit einer vorgegebenen Anzahl von Strahlachsen bildenden Paaren von Sendelichtstrahlen emittierenden Sendern und Empfängern, wobei bei freiem Strahlengang einer Strahlachse die von dem jeweiligen Sender emittierten Sendelichtstrahlen auf den Empfänger treffen, mit einer Sender-Steuereinheit, mittels derer die Sender innerhalb vorgegebener Abtastzyklen periodisch einzeln nacheinander aktivierbar sind, und mit einer Steuereinheit zur Auswertung der an den Ausgängen der Empfänger anstehenden Empfangssignale, wobei innerhalb eines Abtastzyklus in der Steuereinheit die durch Objekteingriffe bedingten Unterbrechungen von Strahlachsen registrierbar sind, **dadurch gekennzeichnet, dass** zur Generierung eines Objektfeststellungssignals in der Steuereinheit eine vorgegebene Anzahl mehrerer Abtastzyklen hinsichtlich des Auftretens von Strahlunterbrechungen von Strahlachsen ausgewertet wird, wobei diese zur Generierung eines Objektfeststellungssignals herangezogene Anzahl der Abtastzyklen einen Multiscanfaktor bildet, welcher als Parameterwert in der Steuereinheit abgespeichert ist.

2. Lichtgitter nach Anspruch 1, **dadurch gekennzeichnet, dass** zur Generierung eines Objektfeststellungssignals in der Steuereinheit mehrere aufeinanderfolgende Abtastzyklen ausgewertet werden.

3. Lichtgitter nach Anspruch 1 oder 2, **dadurch gekennzeichnet, dass** der Multiscanfaktor als Parameterwert in die Steuereinheit eingebbar ist.

4. Lichtgitter nach einem der Ansprüche 1 - 3, **dadurch gekennzeichnet, dass** mehrere Multiscanfaktoren als Bestandteil einer Kennlinie in der Steuereinheit abgespeichert sind.

5. Lichtgitter nach Anspruch 4, **dadurch gekennzeichnet, dass** in der Steuereinheit als Kennlinie für verschiedene Anzahlen von Strahlachsen eines Lichtgitters jeweils ein Multiscanfaktor hinterlegt ist.

6. Lichtgitter nach Anspruch 5, **dadurch gekennzeichnet, dass** innerhalb einer Konfigurationsphase in der Steuereinheit die Anzahl der Strahlachsen bestimmbar ist, und dass hieraus in Kombination mit der abgespeicherten Kennlinie selbsttätig der zur Generierung der Objektfeststellungssignal gültige Multiscanfaktor auswählbar ist.

7. Lichtgitter nach Anspruch 6, **dadurch gekennzeichnet, dass** durch die Auswahl der Steuereinheit eine vorgegebene Reaktionszeit zur Generierung eines Objektfeststellungssignal einstellbar ist.

8. Lichtgitter nach einem der Ansprüche 1 - 7, **dadurch gekennzeichnet, dass** in der Steuereinheit nur dann ein Objektfeststellungssignal generiert wird, wenn innerhalb jedes Abtastzyklus der vorgegebenen Anzahl von Abtastzyklen wenigstens eine Unterbrechung einer Strahlachse registriert wird.

9. Lichtgitter nach Anspruch 8, **dadurch gekennzeichnet, dass** in der Steuereinheit nur dann ein Objektfeststellungssignal generiert wird, wenn innerhalb der einzelnen Abtastzyklen eine beliebige Strahlachse unterbrochen wird.

10. Lichtgitter nach Anspruch 8, **dadurch gekennzeichnet, dass** in der Steuereinheit nur dann ein Objektfeststellungssignal generiert wird, wenn innerhalb der einzelnen Abtastzyklen jeweils dieselbe Strahlachse unterbrochen wird.

**Claims**

1. Light grille barrier with a predetermined number of pairs, which form beam axes, of transmitters, which emit transmitted light beams, and receivers, wherein when a beam path of a beam axis is free the transmitted light beam emitted by the respective transmitter is incident on the receiver, with a transmitter control unit by means of which the transmitters are periodically individually activatable in succession within predetermined scanning cycles, and with a control unit for evaluation of the reception signals present at the outputs of the receivers, wherein the interruptions of beam axes caused by object interventions are registrable within a scanning cycle in the control unit, **characterised in that** for generation of an object detection signal in the control unit a predetermined number of several scanning cycles is evaluated with respect to the occurrence of beam interruptions of beam axes, wherein this number of scanning cycles utilised for generation of an object detection signal forms a multiscan factor which is stored in the control unit as a parameter value.

2. Light grille barrier according to claim 1, **characterised in that** several successive scanning cycles are evaluated for generation of an object detection signal in the control unit.

3. Light grille barrier according to claim 1 or 2, **characterised in that** the multiscan factor can be input into the control unit as a parameter value.

4. Light grille barrier according to any one of claims 1 to 3, **characterised in that** several multiscan factors are stored in the control unit as a component of a characteristic curve.

5. Light grille barrier according to claim 4, **characterised in that** a respective multiscan factor is filed in the control unit as a characteristic curve for different numbers of beam axes of a light grille barrier.

6. Light grille barrier according to claim 5, **characterised in that** the number of beam axes is determinable in the control unit within a configuration phase and that the multiscan factor applicable for generation of the object detection signal is automatically selectable therefrom in combination with the stored characteristic curve.

7. Light grille barrier according to claim 6, **characterised in that** a predetermined reaction time for generation of an object detection signal is settable by the selection of the control unit.

8. Light grille barrier according to any one of claims 1 to 7, **characterised in that** an object detection signal is generated in the control unit only when within each scanning cycle of the predetermined number of scanning cycles at least one interruption of a beam axis is registered.

9. Light grille barrier according to claim 8, **characterised in that** an object detection signal is generated in the control unit only when within the individual scanning cycles a desired beam axis is interrupted.

10. Light grille barrier according to claim 8, **characterised in that** an object detection signal is generated in the control unit only when within the individual scanning cycles the same beam axis is interrupted on each occasion.

**Revendications**

1. Barrière lumineuse avec un nombre prédéfini de paires d'émetteurs émettant des faisceaux de lumière d'émission et de récepteurs formant des axes de faisceau, les faisceaux de lumière d'émission émis par un émetteur atteignant le récepteur associé lorsque le chemin optique d'un axe de faisceau est libre, avec une unité de commande d'émetteurs au moyen desquels les émetteurs sont activables périodiquement l'un après l'autre à l'intérieur de cycles de balayage prédéfinis, et avec une unité de commande pour évaluer les signaux de réception présents aux sorties des récepteurs, les interruptions d'axes de faisceau causées par des intrusions d'objets pendant un cycle de balayage pouvant être enregistrées dans l'unité de commande, **caractérisée en ce que** pour générer un signal de détection d'objet, un nombre prédéfini de plusieurs cycles de balayage sont évalués dans l'unité de commande en ce qui concerne la survenance d'interruptions de faisceau d'axes de faisceau, ce nombre de cycles de balayage utilisé pour générer un signal de détection d'objet formant un facteur de balayage multiple qui est enregistré en tant que valeur de paramètre dans l'unité de commande.

2. Barrière lumineuse selon la revendication 1, **caractérisée en ce que** plusieurs cycles de balayage successifs sont évalués dans l'unité de commande pour générer un signal de détection d'objet.

3. Barrière lumineuse selon la revendication 1 ou 2, **caractérisée en ce que** le facteur de balayage multiple peut être entré en tant que valeur de paramètre dans l'unité de commande.

4. Barrière lumineuse selon une des revendications 1 à 3, **caractérisée en ce que** plusieurs facteurs de balayage multiple sont enregistrés dans l'unité de commande en tant que composant d'une courbe caractéristique.

5. Barrière lumineuse selon la revendication 4, **caractérisée en ce qu'**un facteur de balayage multiple est chaque fois enregistré dans l'unité de commande en tant que courbe caractéristique pour différents nombres d'axes de faisceau d'une barrière lumineuse.

6. Barrière lumineuse selon la revendication 5, **caractérisée en ce que** le nombre d'axes de faisceau peut être déterminé dans l'unité de commande pendant une phase de configuration et que le facteur de balayage multiple valide pour générer le signal de détection d'objet peut être sélectionné automatiquement à partir de celui-ci en combinaison avec la courbe caractéristique enregistrée.

**7.** Barrière lumineuse selon la revendication 6, **caractérisée en ce qu'**un temps de réaction prédéfini pour générer un signal de détection d'objet peut être réglé par la sélection de l'unité de commande.

**8.** Barrière lumineuse selon une des revendications 1 à 7, **caractérisée en ce qu'**un signal de détection d'objet est généré dans l'unité de commande seulement si au moins une interruption d'un axe de faisceau est enregistrée pendant chaque cycle de balayage du nombre prédéfini de cycles de balayage.

**9.** Barrière lumineuse selon la revendication 8, **caractérisée en ce qu'**un signal de détection d'objet est généré dans l'unité de commande seulement si un axe de faisceau quelconque est interrompu pendant les différents cycles de balayage.

**10.** Barrière lumineuse selon la revendication 8, **caractérisée en ce qu'**un signal de détection d'objet est généré dans l'unité de commande seulement si chaque fois le même axe de faisceau est interrompu pendant les différents cycles de balayage.

EP 1 391 752 B1

**Fig. 1**

9

# Fig. 2

**a)**

Objektfeststellungssignal

1

0

**b)**

Objektfeststellungssignal

1

0

# Fig. 3

**a)**

Objektfeststellungssignal

1

0

**b)**

Objektfeststellungssignal

1

0

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19504304 C1
- DE 19510304 C1
- US 5408069 A
- US 5243183 A